# EUROPÄISCHE PATENTSCHRIFT

(11) **EP 0 681 539 B1**
(45) Veröffentlichungstag und Bekanntmachung des Hinweises auf die Patenterteilung: **20.05.1998**
(21) Anmeldenummer: 94931001.5
(22) Anmeldetag: 28.10.1994
(51) Int. Cl.: B60T 13/569, B60T 13/563

(54) **UNTERDRUCKBREMSKRAFTVERSTÄRKER FÜR KRAFTFAHRZEUGE**
VACUUM POWER BRAKE FOR MOTOR VEHICLES
SERVOFREIN A DEPRESSION POUR VEHICULES

(30) Priorität: 08.12.1993 DE 4341838
(43) Veröffentlichungstag der Anmeldung: 15.11.1995
(73) Patentinhaber: ITT Automotive Europe GmbH, 60488 Frankfurt am Main (DE)
(72) Erfinder: WAGNER, Wilfried, D-35625 Hüttenberg (DE); JAKOBI, Ralf, D-65439 Flörsheim (DE); GRAICHEN, Kai-Michael, D-63225 Langen (DE)
(86) Internationale Anmeldenummer: EP9403556
(87) Internationale Veröffentlichungsnummer: WO9515877

(56) Entgegenhaltungen:
- DE-A- 4 021 304
- GB-A- 2 246 180
- US-A- 5 062 348

## Beschreibung

Die Erfindung betrifft einen Unterdruckbremskraftverstärker für Kraftfahrzeuge, mit einem ersten sowie einem zweiten Verstärkerraum, die mittels einer Trennwand voneinander getrennt sind, einer ersten sowie einer zweiten beweglichen Wand, die den ersten bzw. den zweiten Verstärkerraum in eine erste Unterdruckkammer und eine erste Arbeitskammer bzw. eine zweite Unterdruckkammer und eine zweite Arbeitskammer unterteilen, und durch je einen Membranteller sowie je eine daran anliegende Rollmembran gebildet sind, wobei die erste bewegliche Wand auf einem ein Steuerventil aufnehmenden Steuergehäuse und die zweite bewegliche Wand auf einem sich durch die Trennwand hindurch erstreckenden Verbindungsrohr angeordnet sind und wobei das Verbindungsrohr mit einem sich am Steuergehäuse axial abstützenden radialen Kragen versehen ist, an dem der das Steuergehäuse umgreifende, radial innenliegende Randbereich des ersten Membrantellers axial anliegt und durch die erste Rollmembran gehalten wird, deren Wulst in einer außerhalb des Befestigungsbereichs des Verbindungsrohres sowie des ersten Membrantellers im Steuergehäuse ausgebildeten Ringnut eingespannt ist.

Ein derartiger Unterdruckbremskraftverstärker bzw. die Art der Befestigung dessen beweglicher Wände am Steuergehäuse bzw. am Verbindungsrohr ist aus der DE-OS 39 04 641 bekannt. Die einen Bestandteil der ersten beweglichen Wand bildende erste Rollmembran ist an dem dem ersten Membranteller benachbart liegenden Rand des Ringwulstes angebunden, während der die zweite bewegliche Wand gegenüber dem Verbindungsrohr abdichtende Wulst der zweiten Rollmembran zwischen dem sich an einem zweiten radialen Kragen des Verbindungsrohres abstützenden zweiten Membranteller und einem auf das Verbindungsrohr aufgeschobenen Krallring gehalten wird. Der zweite Membranteller ist dabei mit dem Kragen des Verbindungsrohres fest verbunden, insbesondere verschweißt.

Bei derartigen bekannten Unterdruckbremskraftverstärkern besteht jedoch unter bestimmten Betriebsbedingungen die Gefahr eines Ausknöpfens der Rollmembranen, die die Funktionssicherheit solcher Bremsgeräte erheblich beeinträchtigt.

Diese Gefahr tritt insbesondere infolge von Staudruck im Bremsgerät durch dessen Betätigung ohne Unterdruck bzw. mit verschlossenen Rückschlagventilabgängen, da aufgrund des im Bremskraftverstärkergehäuse herrschenden Druckes in radialer Richtung wirkende Kraftkomponenten entstehen, die versuchen, den Ringwulst der ersten Rollmembran aus der Umfangsnut des Steuergehäuses herauszuziehen bzw. die den ersten Membranteller entgegen der Betätigungskraft zu verschieben, so daß der Ringwulst aus der Nut herausgedrückt wird. Dies führt zum Ausfall des Bremsgerätes, dessen Verstärkungskraft nicht mehr aufgebaut werden kann.

Nachteilig sind auch die mit der Verwendung des erwähnten Krallringes verbundenen, verhältnismäßig hohen Herstellungskosten sowie die bei seiner Montage auftretenden Schwierigkeiten.

Es ist daher Aufgabe der vorliegenden Erfindung, die vorstehenden Nachteile zu vermeiden und einen Unterdruckbremskraftverstärker mit den gattungsgemäßen Merkmalen so auszugestalten, daß unter Beibehaltung der Bauart und der Geräte-Kenndaten dessen Betriebssicherheit unter Verwendung der ohnehin vorhandenen Teile gewährleistet ist. Insbesondere soll eine Lösung entwickelt werden, die bei der Befestigung bzw. Abdichtung der zweiten beweglichen Wand auf ein Zusatzteil verzichten kann, einfach montierbar ist und eine zwischen der zweiten Unterdruckkammer und der zweiten Arbeitskammer herrschende, in die "falsche" Richtung wirkende Druckdifferenz sicher abbauen kann.

Diese Aufgabe wird erfindungsgemäß dadurch gelöst, daß die erste Rollmembran am vom ersten Membranteller bzw. dem Kragen des Verbindungsrohres entfernt liegenden Rand des Wulstes so angebunden ist, daß sie mit dem ersten Membranteller einen pneumatischen Raum begrenzt, der mit dem in den Unterdruckkammern herrschenden Druck beaufschlagbar ist. Durch diese Maßnahme wird das durch radiales Aufweiten des Wulstes überschüssige Material der Rollmembran in eine konstruktiv vorgegebene Lage gebracht.

Bei vorteilhaften Weiterbildungen des Erfindungsgegenstandes ist der radial innenliegende Randbereich des Membrantellers umgebördelt ausgebildet, bzw. der radial innenliegenden Randbereich der Trennwand mit einer Umbördelung versehen, die einen darin angeordneten Dichtring gegen axiales Verschieben sichert. Durch diese Maßnahmen wird eine Erhöhung der Stabilität der erwähnten Teile erreicht.

Eine besonders montagefreundliche, wirkungsvolle Abdichtung der zweiten beweglichen Wand gegenüber dem Verbindungsrohr wird bei einer weiteren vorteilhaften Ausgestaltung der Erfindung, bei der die zweite Rollmembran einen radial innenliegenden Wulst aufweist, der mit einem radial nach außen sich erstreckenden zweiten Kragen des Verbindungsrohres zusammenwirkt, dadurch erreicht, daß im radial innenliegenden Randbereich des zweiten Membrantellers eine erste, axial sich erstreckende zylindrische Ringfläche vorgesehen ist, die den Wulst der zweiten Rollmembran radial umgreift. Die erste Ringfläche schließt dabei vorzugsweise an eine Umbördelung kleineren Durchmessers des zweiten Membrantellers an, wobei der Wulst der zweiten Rollmembran unter Vorspannung zwischen dem zweiten Kragen und der Umbördelung axial eingeklemmt ist.

Um eine wirksame Kraftübertragung zwischen der zweiten beweglichen Wand und dem Verbindungsrohr zu erreichen, ist nach einem weiteren vorteilhaften Erfindungsmerkmal vorgesehen, daß der zweite Kragen des Verbindungsrohres in eine axial sich erstreckende zweite Ringfläche übergeht, die am zweiten Membranteller anliegt.

Bei einer weiteren Ausführungsvariante des erfindungsgemäßen Unterdruckbremskraftverstärkers weist die erste Ringfläche an ihrem Umfang mindestens zwei symmetrisch angeordnete Biegelaschen auf, die durch im zweiten Kragen ausgebildete Aussparungen sich hindurch erstrecken und im montieretn Zustand am zweiten Kragen axial anliegen. Durch diese Maßnahme ist eine betriebssichere Fixierung sowohl des Membrantellers als auch der zweiten Rollmembran in ihrer Lage gewährleistet.

Ein in der zweiten Unterdruckkammer eventuell auftretender pneumatischer Differenzdruck kann bei einer anderen Weiterbildung der Erfindung besonders schnell abgebaut werden, wenn das Verbindungsrohr im Befestigungsbereich der zweiten beweglichen Wand Öffnungen aufweist und die zweite Rollmembran mit einer am Verbindungsrohr anliegenden umlaufenden Dichtlippe versehen ist.

Eine Erhöhung der Dichtwirkung der ersten Rollmembran im Befestigungsberich der ersten beweglichen Wand auf dem Steuergehäuse bringt ein weiteres Erfindungsmerkmal mit sich, nach dem der Wulst der ersten Rollmembran eine ringförmige Fläche aufweist, die am radial innenliegenden Randbereich des ersten Membrantellers anliegt. Außerdem werden dadurch Klappergeräusche weitgehend vermieden.

Weitere Einzelheiten und Vorteile des erfindungsgemäßen Unterdruckbremskraftverstärkers ergeben sich aus der nachfolgenden Beschreibung eines Ausführungsbeispieles der Erfindung, das anhand der beiliegenden Zeichnung naher erläutert ist, wobei die einander entsprechenden Teile in der Zeichnung mit den gleichen Bezugszeichen versehen sind.

Es zeigt:

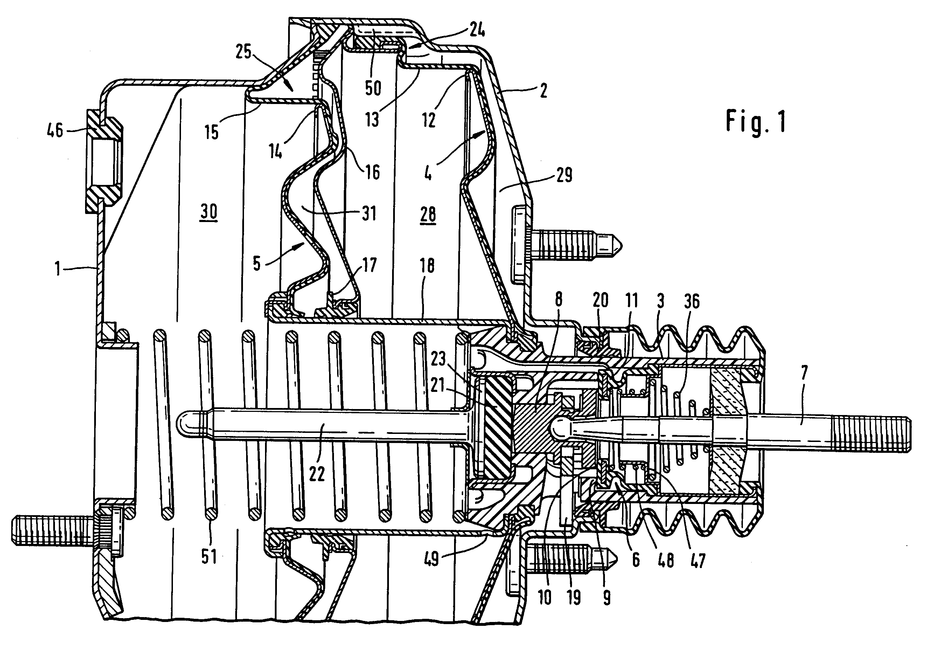

- Fig. 1: einen Axialschnitt durch eine Ausführung des erfindungsgemäßen Unterdruckbremskraftverstärkers;
- Fig. 2: den Befestigungsbereich der ersten beweglichen Wand des in Fig. 1 gezeigten Unterdruckbremskraftverstärkers in größerem Maßstab und
- Fig. 3: den Befestigungsbereich der zweiten beweglichen Wand des in Fig. 1 gezeigten Unterdruckbremskraftverstärkers in größerem Maßstab.

Der in der Zeichnung dargestellte Tandembremskraftverstärker weist ein Verstärkergehäuse auf, das durch zwei schalenförmige Gehäusehälften 1, 2 gebildet ist, die an ihrem Umfang beispielsweise durch Lancierungen zusammengehalten sind. Das Innere des Verstärkergehäuses wird mittels einer darin abgedichtet angeordneten Trennwand 16 in einen hinteren (bremspedalseitigen) Verstärkerraum 24 sowie einen vorderen (hauptzylinderseitgen) Verstärkerraum 25 aufgeteilt, wobei der hintere Verstärkerraum 24 durch eine erste bewegliche Wand 4 in eine erste Unterdruckkammer 28 konstanten Druckes und eine erste Arbeitskammer 29 veränderlichen Druckes und der vordere Verstärkerraum 25 durch eine zweite bewegliche Wand 5 in eine zweite Unterdruckkammer 30 und eine zweite Arbeitskammer 31 unterteilt sind. Die vordere Gehäusehälfte 1 ist mit einem Unterdruckanschluß 46 versehen, mittels dessen die zweite Unterdruckkammer 30 an eine geeignete Unterdruckquelle, beispielsweise einen Ansaugkrümmer des Kraftfahrzeugmotors, angeschlossen werden kann.

Ein durch eine Betätigungsstange 7 betätigbares Steuerventil 6 ist in einem in der hinteren Gehäusehälfte 2 abgedichtet geführten Steuergehäuse 3 untergebracht und besteht aus einem am Steuergehäuse 3 ausgebideten ersten Dichtsitz 9, einem an einem mit der Betätigungsstange 7 verbundenen, axial verschiebbaren Ventilkolben 8 ausgebildeten zweiten Dichtsitz 10 sowie einem mit beiden Dichtsitzen 9,10 zusammenwirkenden Tellerventilkörper 11, der mittels einer sich an einer den Tellerventilkörper 11 im Steuergehäuse 3 haltenden Haltehülse 47 abstützenden Ventilfeder 48 gegen die Dichtsitze 9,10 gedrückt wird.

Während die erste bewegliche Wand 4 auf dem Steuergehäuse 3 angeordnet und durch einen aus Blech tiefgezogenen ersten Membranteller 12 sowie eine daran anliegende flexible erste Rollmembran 13 gebildet ist, besteht die zweite bewegliche Wand 5 aus einem zweiten Membranteller 14 sowie einer zweiten Rollmembran 15 und ist an dem vorderen, bzw. in die zweite Unterdruckkammer 30 hineinragenden Ende eines mit dem Steuergehäuse 3 in kraftübertragender Verbindung stehenden, vorzugsweise metallischen Verbindungsrohres 18 angeordnet. Beide Unterdruckkammern 28,30 sind mittels im Befestigungsbereich des Verbindungsrohres 18 auf dem Steuergehäuse 3 ausgebildeter Öffnungen 49 miteinander verbunden, während eine pneumatische Verbindung zwischen den beiden Arbeitskammern 29,31 über im Befestigungsbereich der Trennwand 16 im Verstärkergehäuse bzw. im Verbindungsbereich der beiden Gehäusehälften 1,2 ausgebildete Kanäle 50 erfolgt. Die Ausgangskraft des Bremskraftverstärkers wird über eine in einer stirnseitigen Ausnehmung des Steuergehäuses 3 aufgenommene gummielastische Reaktionsscheibe 21 sowie eine einen Kopfflansch 23 aufweisende Druckstange 22 auf einen Betätigungskolben eines nicht dargestellten Hauptbremszylinders der Bremsanlage übertragen, der an der unterdruckseitigen bzw. vorderen Gehäusehälfte 1 des Bremskraftverstärkergehäuses angebracht ist.

Eine in der Zeichnung schematisch dargestellte Rückstellfeder 51, die sich an der unterdruckseitigen Gehäusehälfte 1 abstützt, hält die beweglichen Wände 4 und 5 in der gezeigten Ausgangsstellung. Außerdem ist eine Kolbenstangenrückholfeder 36 vorgesehen, die wirkungsmäßig zwischen der Haltehülse 47 und der Betätigungsstange 7 angeordnet ist und deren Kraft für eine Vorspannung des Ventilkolbens 8 bzw. dessen Ventilsitzes 10 gegenüber dem Tellerventilkörper 11 sorgt. Die Rückstellbewegung des Ventilkolbens 8 wird dabei durch ein senkrecht zur Längsachse des erfindungsgemäßen Bremskraftverstärkers ins Steuergehäuse 3 seitlich eingeschobenes, vorzugsweise U-förmig ausgebildetes Querglied 19 begrenzt, das in Lösestellung an einem ringförmigen Bereich der hinteren` bzw. bremspedalseitigen Gehäusehälfte 2 axial anliegt, dessen zylindrische Verlängerung einen das Steuergehäuse 3 gegenüber der Atmosphäre abdichtenden Dichtring 20 aufnimmt.

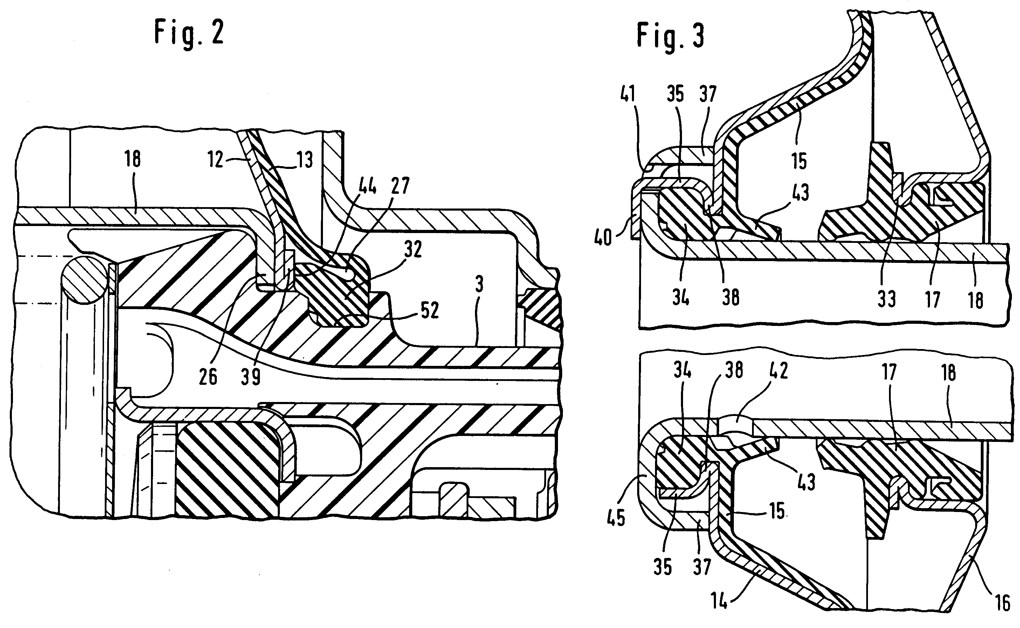

Wie insbesondere der Fig. 2 zu entnehmen ist, weist das Verbindungsrohr 18 an seinem dem Steuergehäuse 3 zugeordneten Ende einen radial nach innen sich erstreckenden Kragen 26 auf, der mit einer nicht näher bezeichneten, am Steuergehäuse 3 ausgebildeten Ringfläche in kraftübertragender Verbindung steht und an dem der radial innenliegende Randbereich des ersten Membrantellers 12 axial anliegt, der vorzugsweise mit einer Umbördelung 39 versehen ist. Die mit dem ersten Membranteller 12 zusammenwirkende erste Rollmembran 13 ist mittels eines ringförmigen Wulstes 32 in einer außerhalb des vom Kragen 26 sowie vom Randbereich des ersten Membrantellers 12 umgriffenen Anlagebereichs im Steuergehäuse 3 ausgebildeten Ringnut 52 eingespannt und an dem vom ersten Membranteller 12 entfernt liegenden Rand des Wulstes 32 so angebunden, daß sie mit dem Membranteller 12 einen pneumatischen Raum 27 begrenzt. Dadurch wird gewährleistet, daß beim Auftreten eines pneumatischen Druckes in der ersten Unterdruckkammer 28, der höher ist als der in der ersten Arbeitskammer 29 herrschende Druck, die erste Rollmembran 13 um die Anbindungslinie am Wulst 32 kippen kann, so daß dadurch keine Kraftkomponente entsteht, die ein Ausknöpfen des Wulstes 32 aus der Ringnut 52 zur Folge haben könnte. An seinem dem ersten Membranteller 12 benachbarten Rand weist der Wulst 32 eine an der Umbördelung 39 axial anliegende Fläche 44 auf, die den ersten Membranteller 12 und dadurch auch das Verbindungsrohr 18 am Steuergehäuse 3 zuverlässig hält.

Fig. 3 zeigt schließlich den Befestigungsbereich der zweiten beweglichen Wand 5 auf dem Verbindungsrohr 18. Der Darstellung ist zu entnehmen, daß das vordere, der zweiten beweglichen Wand 5 zugeordnete Ende des Verbindungsrohres 18 einen radial nach außen sich erstreckenden zweiten Kragen 45 aufweist, der in eine koaxial zur Verbindungsrohrachse ausgebildete Ringfläche 37 übergeht, an der sich der zweite Membranteller 14 axial abstützt und somit eine Kraftübertragung von der zweiten beweglichen Wand 5 auf das Verbindungsrohr 18 ermöglicht. Im radial innenliegenden Randbereich des zweiten Membrantellers 14 ist eine Umbördelung 38 ausgebildet, an die eine koaxial zur Ringfläche 37 des Verbindungsrohres 18 ausgebildete Ringfläche 35 auschließt.

Der durch den zylindrischen Endbereich des Verbindungsrohres 18, den zweiten Kragen 45, die Ringfläche 35 sowie den umgebördelten Randbereich des zweiten Membrantellers 14 begrenzte Raum nimmt einen radial innenliegend ausgebildeten Wulst 34 der zweiten Rollmembran 15 auf, an den eine auf dem Verbindungsrohr 18 anliegende umlaufende Dichtlippe 43 anschließt. In dem zwischen dem Wulst 34 und der Dichtlippe 43 liegenden Abschnitt weist das Verbindungsrohr 18 mehrere Öffnungen 42 auf, die einen Abbau eines in der zweiten Unterdruckkammer 30 eventuell auftretenden Überdruckes ermöglichen. Um den zweiten Membranteller 14 sowie den radial innenliegenden Bereich der zweiten Rollmembran 15 in ihrer Lage gegenüber dem Verbindungsrohr 18 zu fixieren, ist die Ringfläche 35 des zweiten Membrantellers 14 mit mindestens zwei vorzugsweise radial gegenüberliegend ausgebildeten Biegelaschen 40 versehen, die bei der Montage des erfindungsgemäßen Unterdruckbremskraftverstärkers durch im zweiten Kragen 45 vorgesehene Aussparungen 41 hindurchgeschoben werden und radial nach innen oder wahlweise nach außen so umgestellt werden, daß sie am zweiten Kragen 45 zur Anlage kommen.

Schließlich ist der Fig. 3 zu entnehmen, daß auch der radial innenliegende Randbereich der Trennwand 16 eine umlaufende Umbördelung 33 aufweist, die einen darin angeordneten Gleitdichtring 17 axial fixiert.

### Bezugszeichenliste

- 1: Gehäusehälfte
- 2: Gehäusehälfte
- 3: Steuergehäuse
- 4: Wand
- 5: Wand
- 6: Steuerventil
- 7: Betätigungsstange
- 8: Ventilkolben
- 9: Dichtsitz
- 10: Dichtsitz
- 11: Ventilkörper
- 12: Membranteller
- 13: Rollmembran
- 14: Membranteller
- 15: Rollmembran
- 16: Trennwand
- 17: Dichtring
- 18: Verbindungsrohr
- 19: Querglied
- 20: Dichtring
- 21: Reaktionsscheibe
- 22: Druckstange
- 23: Kopfflansch
- 24: Verstärkerraum
- 25: Verstärkerraum
- 26: Kragen
- 27: Raum
- 28: Unterdruckkammer
- 29: Arbeitskammer
- 30: Unterdruckkammer
- 31: Arbeitskammer
- 32: Wulst
- 33: Umbördelung
- 34: Wulst
- 35: Ringfläche
- 36: Kolbenstangenrückholfeder
- 37: Ringfläche
- 38: Umbördelung
- 39: Umbördelung
- 40: Bieglasche
- 41: Aussparung
- 42: Öffnung
- 43: Dichtlippe
- 44: Fläche
- 45: Kragen
- 46: Unterdruckanschluß
- 47: Haltehülse
- 48: Ventilfeder
- 49: Öffnung
- 50: Kanal
- 51: Rückstellfeder
- 52: Ringnut

## Patentansprüche

1. Unterdruckbremskraftverstärker für Kraftfahrzeuge mit einem ersten sowie einem zweiten Verstärkerraum (24,25), die mittels einer Trennwand (16) voneinander getrennt sind, einer ersten (4) sowie einer zweiten (5) beweglichen Wand, die den ersten bzw. den zweiten Verstärkerraum in eine erste Unterdruckkammer (28) und eine erste Arbeitskammer (29) bzw. eine zweite Unterdruckkammer (30) und eine zweite Arbeitskammer (31) unterteilen und durch je einen Membranteller (12,14) sowie je eine darin anliegende Rollmembran (13,15) gebildet sind, wobei die erste bewegliche Wand auf einem ein Steuerventil (6) aufnehmenden Steuergehäuse (3) und die zweite bewegliche Wand auf einem sich durch die Trennwand (16) hindurch erstreckenden Verbindungsrohr (18) angeordnet sind, und wobei das Verbindungsrohr (18) mit einem sich am Steuergehäuse (3) axial abstützenden radialen Kragen (26) versehen ist, an dem der das Steuergehäuse (3) umgreifende, radial innenliegende Randbereich (39) des ersten Membrantellers (12) axial anliegt und durch die erste Rollmembran (13) gehalten wird, deren Wulst (32) in einer außerhalb des Befestigungsbereichs des Verbindungsrohres sowie des ersten Membrantellers im Steuergehäuse ausgebildeten Ringnut 52 eingespannt ist, dadurch **gekennzeichnet**, daß die erste Rollmembran (13) am vom ersten Membranteller (12) bzw. dem Kragen (26) des Verbindungsrohrs (18) entfernt liegenden Rand des Wulstes (32) so angebunden ist, daß sie mit dem ersten Membranteller (12) einen pneumatischen Raum (27) begrenzt, der mit dem in den Unterdruckkammern (28,30) herrschenden Druck beaufschlagbar ist.

2. Unterdruckbremskraftverstärker nach Anpruch 1, dadurch **gekennzeichnet,** daß der radial innenliegende Randbereich des ersten Membrantellers (12) umgebördelt ausgebildet ist.

3. Unterdruckbremskraftverstärker nach Anpruch 1, dadurch **gekennzeichnet,** daß der radial innenliegende Randbereich der Trennwand (16) mit einer Umbördelung (33) versehen ist, die einen darin angeordneten Dichtring (17) gegen axiales Verschieben sichert.

4. Unterdruckbremskraftverstärker nach einem der Ansprüche 1 bis 3, wobei die zweite Rollmembran einen radial innenliegenden Wulst aufweist, der mit einem radial nach außen sich erstreckenden zweiten Kragen des Verbindungsrohrs abdichtend zusammenwirkt, dadurch **gekennzeichnet**, daß im radial innenliegenden Randbereich des zweiten Membrantellers (14) eine erste, axial sich erstreckende zylindrische Ringfläche (35) vorgesehen ist, die den Wulst (34) der zweiten Rollmembran (15) radial umgreift.

5. Unterdruckbremskraftverstärker nach Anspruch 4, dadurch **gekennzeichnet**, daß der zweite Kragen (45) des Verbindungsrohrs (18) in eine zweite axial sich erstreckende Ringfläche (37) übergeht, die am zweiten Membranteller (14) anliegt.

6. Unterdruckbremskraftverstärker nach Anspruch 4 oder 5, dadurch **gekennzeichnet**, daß die erste Ringfläche (35) an eine Umbördelung (38) kleineren Durchmessers anschließt, wobei der Wulst (34) der zweiten Rollmembran (15) unter Vorspannung zwischen dem Kragen (45) und der Umbördelung (38) axial eingeklemmt ist.

7. Unterdruckbremskraftverstärker nach einem der Ansprüche 4 bis 6, dadurch **gekennzeichnet**, daß die erste Ringfläche (35) an ihrem Umfang mindestens zwei symmetrisch ausgebildete Biegelaschen (40) aufweist, die durch im zweiten Kragen (45) ausgebildete Aussparungen (41) sich hindurch erstrecken und im montierten Zustand am zweiten Kragen (45) bzw. der Ringfläche (37) anliegen.

8. Unterdruckbremskraftverstärker nach einem der vorhergehenden Ansprüche, dadurch **gekennzeichnet**, daß das Verbindungsrohr (18) im Befestigungsbereich der zweiten beweglichen Wand (5) Öffnungen (42) aufweist und die zweite Rollmembran (15) mit einer am Verbindungsrohr (18) anliegenden umlaufenden Dichtlippe (43) versehen ist.

9. Unterdruckbremskraftverstärker nach einem der vorhergehenden Ansprüche, dadurch **gekennzeichnet**, daß der Wulst (32) der ersten Rollmembran (13) eine ringförmige Fläche (44) aufweist, die am radial innenliegenden Randbereich des ersten Membrantellers (12) anliegt.

## Claims

1. Vacuum brake force booster for motor vehicles comprising a first and a second booster chamber (24, 25) which are separated from each other by means of a dividing wall (16), and comprising a first (4) and a second (5) moveable wall which divide the first and the second booster chamber into a first vacuum chamber (28) and a first actuator chamber (29) and a second vacuum chamber (30) and a second actuator chamber (31), respectively, and are formed by, in each case, a diaphragm disc (12, 14) and a roll diaphragm (13, 15), which abuts against the diaphragm disc, wherein the first moveable wall is arranged on a control housing (3), which accommodates a control valve (6), and the second moveable wall is arranged on a connecting pipe (18), which extends through the dividing wall (16), and wherein the connecting pipe (18) is provided with a radial collar (26) which is axially supported on the control housing (3), against which collar a radially inwardly disposed edge region (39) of the first diaphragm disc (12) which embraces the control housing (3) abuts axially and is held in position by the first roll diaphragm (13), a beading (32) of which is clamped in a ring groove (52) that is provided in the control housing outside the mounting region of the connecting pipe and of the first diaphragm disc,
characterized in that the first roll diaphragm (13) is connected to the edge of the beading (32) which is disposed remotely from the first diaphragm disc (12) or from the collar (26) of the connecting pipe (18), such that the roll diaphragm, together with the first diaphragm disc (12), defines a pneumatic chamber (27) which can be acted upon by the pressure prevailing in the vacuum chambers (28, 30).

2. Vacuum brake force booster as claimed in claim 1, characterized in that the radially inwardly disposed edge region of the first diaphragm disc (12) is designed to be flanged.

3. Vacuum brake force booster as claimed in claim 1, characterized in that the radially inwardly disposed edge region of the dividing wall (16) is provided with a flange (33) which secures a sealing ring (17) arranged therein against axial displacement.

4. Vacuum brake force booster as claimed in any one of claims 1 to 3, wherein the second roll diaphragm comprises a radially inwardly disposed beading which cooperates in a sealing manner with a radially outwardly extending second collar of the connecting pipe,
characterized in that a first axially extending cylindrical ring surface (35), which radially embraces the beading (34) of the second roll diaphragm (15), is provided in the radially inwardly disposed edge region of the second diaphragm disc (14).

5. Vacuum brake force booster as claimed in claim 4, characterized in that the second collar (45) of the connecting pipe (18) passes over into a second axially extending ring surface (37) which abuts against the second diaphragm disc (14).

6. Vacuum brake force booster as claimed in claim 4 or claim 5, characterized in that the first ring surface (35) is adjacent to a flange (38) having a smaller diameter, the beading (34) of the second roll diaphragm (15) being clamped axially, with prestressing, between the collar (45) and the flange (38).

7. Vacuum brake force booster as claimed in any one of claims 4 to 6,
characterized in that the first ring surface (35) is provided at its circumference with at least two symmetrically designed bent tongues (40) which extend through openings (41) provided in the second collar (45) and which, when assembled, abut axially against the second collar (45) or the ring surface (37).

8. Vacuum brake force booster as claimed in any one of the preceding claims,
characterized in that the connecting pipe (18) is provided with openings (42) in the mounting region of the second moveable wall (5), and the second roll diaphragm (15) is provided with a circumferential sealing lip (43) which abuts against the connecting pipe (18).

9. Vacuum brake force booster as claimed in any one of the preceding claims,
characterized in that the beading (32) of the first roll diaphragm (13) comprises an annular surface (44) which abuts against the radially inwardly disposed edge region of the first diaphragm disc (12).

## Revendications

1. Amplificateur de force de freinage à dépression, pour véhicule automobile, comprenant un premier et un second compartiments d'amplificateur (24, 25), qui sont séparés l'un de l'autre par une paroi séparatrice (16), une première (4) et une seconde (5) parois mobiles, qui divisent respectivement le premier et le second compartiments d'amplificateur en une première chambre à dépression (28) et une première chambre de travail (29) et en une seconde chambre à dépression (30) et une seconde chambre de travail (31) et sont formées chacune d'un plateau à membrane (12, 14) respectif et d'une membrane à déroulement (13, 15) respective appliquée dans celui-ci, tandis que la première paroi mobile est disposée sur un boitier de commande (3) servant à loger une valve de commande (6) et la seconde paroi mobile est disposée sur un tube de liaison (18), qui s'étend en passant à travers la paroi séparatrice (16), et que le tube de liaison (18) est pourvu d'un collet radial (26) qui prend appui axialement sur le boîtier de commande (3) et sur lequel la zone marginale radialement intérieure (39) du premier plateau à membrane (12) qui entoure le boitier de commande (3) prend appui axialement en étant maintenue par la première membrane à déroulement (13) dont un bourrelet (32) est introduit sous contrainte dans une gorge annulaire (52) ménagée dans le boîtier de commande en dehors de la zone de fixation du tube de liaison, ainsi que du premier plateau à membrane, caractérisé en ce que la première membrane à déroulement (13) est reliée au bord du bourrelet (32) situé à l'opposé du premier plateau à membrane (12) ou du collet (26) du tube de liaison (18), d'une façon telle qu'elle délimite avec le premier plateau à membrane (12), un volume pneumatique (27) qui peut être soumis à l'action de la pression régnant dans les chambres à dépression (28, 30).

2. Amplificateur de force de freinage à dépression suivant la revendication 1, caractérisé en ce que la zone marginale radialement intérieure du premier plateau à membrane (12) est réalisée avec un bord rabattu.

3. Amplificateur de force de freinage à dépression suivant la revendication 1, caractérisé en ce que la zone marginale radialement intérieure de la paroi séparatrice (16) est pourvue d'un bord rabattu (33) qui immobilise à l'encontre d'un déplacement axial une bague d'étanchéité (17) qui y est disposée.

4. Amplificateur de force de freinage à dépression suivant l'une des revendications 1 à 3, dans lequel la seconde membrane à déroulement comporte un bourrelet radialement intérieur qui coopère d'une manière étanche avec un second collet du tube de liaison s'étendant radialement vers l'extérieur, caractérisé en ce que, dans la zone marginale radialement intérieure du second plateau à membrane (14), il est prévu une première surface annulaire cylindrique (35), s'étendant axialement, qui entoure radialement le bourrelet (34) de la seconde membrane à déroulement (15).

5. Amplificateur de force de freinage à dépression suivant la revendication 4, caractérisé en ce que le second collet (45) du tube de liaison (18) se prolonge par une seconde surface annulaire (37) s'étendant axialement qui prend appui sur le second plateau à membrane (14).

6. Amplificateur de force de freinage à dépression suivant la revendication 4 ou 5, caractérisé en ce que la première surface annulaire (35) se raccorde à un bord rabattu (38) de plus petit diamètre, tandis que le bourrelet (34) de la seconde membrane à déroulement (15) est pincé axialement, sous une precontrainte, entre le collet (45) et le bord rabattu (38).

7. Amplificateur de force de freinage à dépression suivant l'une des revendications 4 à 6, caractérisé en ce que la première surface annulaire (35) comporte, sur sa périphérie, au moins deux pattes de pliage (40) réalisées d'une manière symétrique qui s'étendent en passant à travers des évidements (41) ménagés dans le second collet (45) et qui, à l'état monté, prennent appui sur le second collet (45) ou sur la surface annulaire (37).

8. Amplificateur de force de freinage à dépression suivant l'une des revendications précédentes, caractérisé en ce que le tube de liaison (18) comporte des ouvertures (42) dans la zone de fixation de la seconde paroi mobile (5) et la seconde membrane à déroulement (15) est pourvue d'une lèvre d'étanchéité (43) qui en fait le tour et prend appui sur le tube de liaison (18).

9. Amplificateur de force de freinage à dépression suivant l'une des revendications précédentes, caractérisé en ce que le bourrelet (32) de la première membrane à déroulement (13) comporte une surface annulaire (44) qui prend appui sur la zone marginale radialement intérieure du premier plateau à membrane (12).
